# EUROPEAN PATENT SPECIFICATION

(11) **EP 0 735 391 B1**
(45) Date of publication and mention of the grant of the patent: **30.12.1998**
(21) Application number: 95112422.1
(22) Date of filing: 08.08.1995
(51) Int. Cl.: G02B 6/38

(54) **Optical fiber assembly and manufacturing method for the same**
Optische Faseranordnung und dessen Herstellungsverfahren
Assemblage à fibre optique et sa méthode de fabrication

(30) Priority: 31.03.1995 JP 100670/95
(43) Date of publication of application: 02.10.1996
(73) Proprietor: SEIKOH GIKEN Co., Ltd., Matsudo-shi, Chiba-ken (JP)
(72) Inventor: Takahashi,Mitsuo, Matsudo-shi, Chiba-ken (JP); Yamada,Kunio, Matsudo-shi, Chiba-ken (JP)
(74) Representative: Hosbach, Hans Ulrich, Dipl.-Ing.

(56) References cited:
- EP-A- 0 131 742
- EP-A- 0 262 765
- EP-A- 0 405 666
- US-A- 4 813 760
- PATENT ABSTRACTS OF JAPAN vol. 87 no. 11 (P-557) 17 March 1987 & JP-A-61 241707 (SUMITOMO ELECTRIC IND LTD) 28 October 1986

## Description

### BACKGROUND OF THE INVENTION

### 1. Field of the Invention

The present invention relates to an optical fiber assembly such as an optical fiber connector plug and, more particularly, to an optical fiber assembly which is expected to be used under a severe environmental condition wherein temperature frequently changes over a wide range with high and low extreme temperatures.

### 2. Description of the Related Art

An optical fiber assembly is often used under a severe environmental condition wherein temperature frequently changes greatly between high and low extremes. The following describes problems found in such an optical fiber assembly.

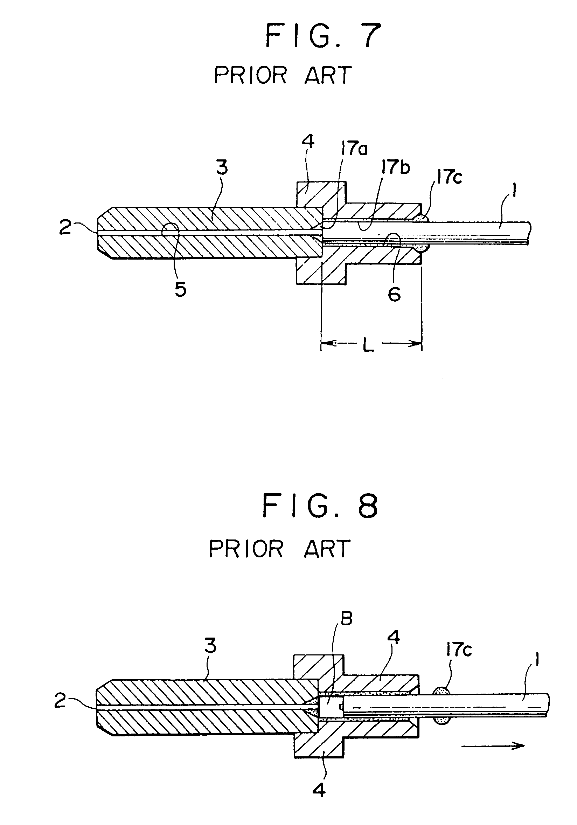

FIG. 7 is a cross-sectional view showing a conventional optical fiber connector plug; FIG. 8 is a cross-sectional view illustrating the optical fiber connector plug which has been broken during a heating cycle test. A zirconia ceramic ferrule is extensively used for a ferrule 3 which has a through hole for receiving an optical fiber 2 at the center of the ferrule 3. A metallic supporting sleeve 4 made of stainless steel has a flange, a stepped hole for receiving the base of the ferrule 3, and a hole for receiving an optical fiber protective sheath 1.

The optical fiber protective sheath 1 employs UV resin or PVC resin. The optical fiber 2 is fixed in a hole 5 of the ferrule 3 with an epoxy resin adhesive agent 17a; the optical fiber protective sheath 1 is glued and fixed on the metallic supporting sleeve 4 with epoxy resin adhesive agents 17b, 17c.

Various tests are conducted, expecting that the optical fiber assembly will be used in a severe environment. The upper limit of the temperature range which an optical connector is required to survive during heating cycle test is +80°C and the lower limit is -40°C. During the heating cycle test, the temperature is increased from 25°C to the upper limit, namely, +80°C in 30 minutes, then the upper limit temperature is maintained for 30 minutes; the temperature is then decreased back to 25°C in 30 minutes, and the 25°C temperature is maintained for 30 minutes before it is decreased to the lower limit, namely, -40°C, in 30 minutes; then the -40°C temperature is maintained for 30 minutes before it is increased back to 25°C in 30 minutes and the 25°C temperature is maintained for 30 minutes. This cycle is repeated. The number of repetitions ranges from 10 to 1000 cycles although it depends on the request of each user. In the heating cycle test, the optical characteristics of the optical connector are required to stay within specified values.

The heating cycle test is one of the extremely exacting tests for a device with an optical fiber; there has been a problem in that an optical fiber breaks during a heating cycle test which consists of many repeated cycles of 100 or more.

Specifically, as shown in FIG. 7, it often happens that the optical fiber 2 breaks at point B and the optical fiber sheath 1 moves out in the direction of the arrow from the stepped hole 6 of the ferrule 3.

The problem is considered attributable mainly to the difference in expansion from the difference in the linear expansion coefficient based on the different materials used for the metallic supporting sleeve 4 and the optical fiber protective sheath 1, the transition of the epoxy resin adhesive agent into hard glass due to curing, the change which takes place in the hardness of the protective sheath made of hard-to-stick PVC resin, and unsuccessful adhesion to the protective sheath 1 which has a smooth surface. When stainless steel is used for the metallic supporting sleeve 4, the linear expansion coefficient, which constitutes a factor for the shift in the axial direction, will be approximately 12 x 10⁻⁶/°C. In the case of a single-mode (SM) optical fiber core with a quartz (Si) type clad, the linear expansion coefficient is 12 x 10⁻⁶/°C which is practically similar to the one obtained with the stainless steel. Using the PVC resin, however, for the optical fiber protective sheath 1 causes a linear expansion coefficient, which constitutes a factor for the shift in the axial direction, to be 50 x 10⁻⁶/°C, indicating a significant difference between the core and the stainless steel.

If an adhesion length L of the protective sheath 1 is 5 mm and the difference in temperature during the heating cycle test is 120°C, then the expansion of the protective sheath 1 will be 30 µm in relation to the axial expansion 7 µm of the metallic supporting sleeve 4, the difference in expansion being approximately 23 µm. Hence, the protective sheath 1, which is incompletely glued at high temperature, extends out of the supporting sleeve 4 by the length which corresponds to the difference in expansion between the protective sheath 1 and the flange. It is considered that the protective sheath 1 moves to the right in FIG. 7 and FIG. 8 because it is difficult for it to move toward the ferrule.

On the contrary, the protective sheath 1 shrinks at low temperature; however, it does not go back to home position thereof. This is considered because the PVC resin hardens at the extremely low temperature, namely, -40°C and the frictional force or the like produced between the protective sheath 1 and the surface of the ferrule hole prevents the protective sheath 1 from going back to the home position thereof.

Thus, the PVC resin protective sheath 1 comes out in a very small amount by the difference in expansion for each cycle.

Hence, it is presumed that tensile stress in the axial direction is accumulated in the optical fiber 2 for each cycle until the optical fiber 2 finally breaks. FIG. 8 shows the optical fiber 2 which has broken with the protective sheath 1 drawn together with the adhesive agent 17c out of the hole of the supporting sleeve 4. The phenomenon where a part of the optical fiber slips out is called "pistoning phenomenon."

The breakage of the optical fiber stated above is a critical shortcoming of an optical fiber assembly. Repeated application of excessive stress to a part of the optical fiber can cause deterioration in the optical characteristics of the optical fiber even if the optical fiber does not break.

### SUMMARY OF THE INVENTION

Accordingly, it is an object of the present invention to provide an optical fiber assembly which is capable of solving the problem such as the breakage of the optical fiber in the above-mentioned optical fiber assembly which is expected to be used under a severe environmental condition wherein temperature frequently changes over a wide range with high and low extremes.

It is another object of the present invention to provide a manufacturing method for an optical fiber assembly, whereby an optical fiber assembly, which is expected to be used under a severe environmental condition wherein temperature frequently changes over a wide range with high and low extremes, can be manufactured quickly by an easy manufacturing process.

To these ends, according to one aspect of the present invention, there is provided an optical fiber as defined in claim 1.

The distal end of the metal pipe or the sheath of the optical fiber assembly is butted against and fixed to the ferrule.

The optical fiber assembly is an optical fiber connector plug and the ferrule is made of ceramic. The supporting sleeve may be of a metal sleeve.

To accomplish the second object stated above, according to the present invention, there is provided a manufacturing method for an optical fiber assembly as defined in claim 5.

### BRIEF DESCRIPTION OF THE DRAWINGS

FIG. 1 is a diagram showing an embodiment of an optical fiber assembly in accordance with the present invention, the assembly being partially cut away;
FIG. 2 is a schematic diagram showing components used in the aforesaid embodiment;
FIG. 3 is a schematic diagram showing a crimping step in the assembling process for the aforesaid embodiment;
FIG. 4 is a cross-sectional view showing a ferrule which has been press-fitted and fixed in the metal supporting sleeve in the manufacturing process for a second embodiment;
FIG. 5 is a diagram showing a metal pipe which has been connected to the optical fiber in the manufacturing process for the second embodiment;
FIG. 6 is a cross-sectional view showing a state wherein the optical fiber and the metal pipe, which are shown in FIG. 5, have been inserted into the ferrule and the metal supporting sleeve in the manufacturing process for the second embodiment;
FIG. 7 is a cross-sectional view showing a conventional optical fiber connector plug; and
FIG. 8 is a cross-sectional view illustrative of the optical fiber connector plug which has broken during a heating cycle test.

### DESCRIPTION OF THE PREFERRED EMBODIMENTS

The optical fiber assembly in accordance with the present invention will now be described in detail with reference mainly to the accompanying drawings.

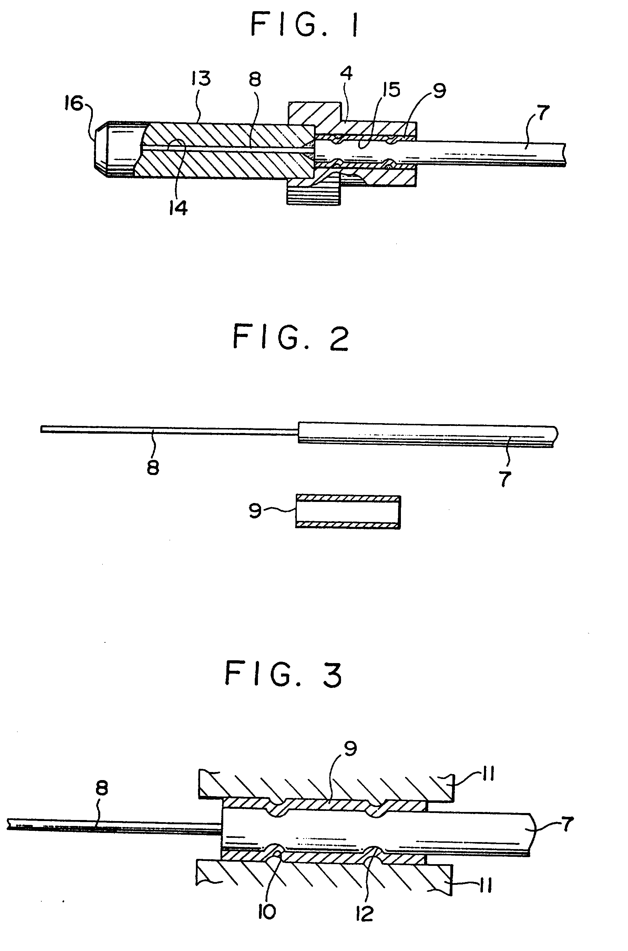

FIG. 1 is the diagram showing an embodiment of the optical fiber assembly according to the present invention, a part of the assembly being cut away; FIG. 2 is the schematic diagram showing the components used for the embodiment; and FIG. 3 is the schematic diagram showing the crimping step for assembling the embodiment.

FIG. 2 shows the components of the optical fiber connector plug which is the embodiment of the optical fiber assembly in accordance with the invention.

A protective sheath 7 at the distal end of the optical fiber is removed to expose an optical fiber 8. A thin-wall metal pipe 9 made of stainless steel is placed over the distal end of the protective sheath 7. The metal pipe 9 is crimped by a crimping tool 11 so as to increase the crimping stress of the metal pipe 9 and the protective sheath 7. FIG. 3 shows the metal pipe 9, the shape of which has been altered in the crimping step in the assembling process of the embodiment.

The crimping tool 11, which is provided with a plurality of projections 10, is used to form a plurality of indentations 12 in the surface of the metal pipe 9, so that the corresponding projections on the internal surface are let bite into the outer peripheral surface of the protective sheath 7.

As shown in FIG. 1, the optical fiber 8 is inserted in a through hole 14 provided at the center of a ferrule 13 and fixed with an epoxy resin adhesive agent.

The metal pipe 9 is inserted in a stepped hole 15 of a metal supporting sleeve and the epoxy resin adhesive agent is charged, then the assembly of the aforesaid optical fiber and the metal pipe 9 is inserted and glued. Lastly, an end surface 16 of the ferrule 13 and the distal end of the optical fiber are polished for finishing.

The second embodiment and the manufacturing method for the same will now be described.

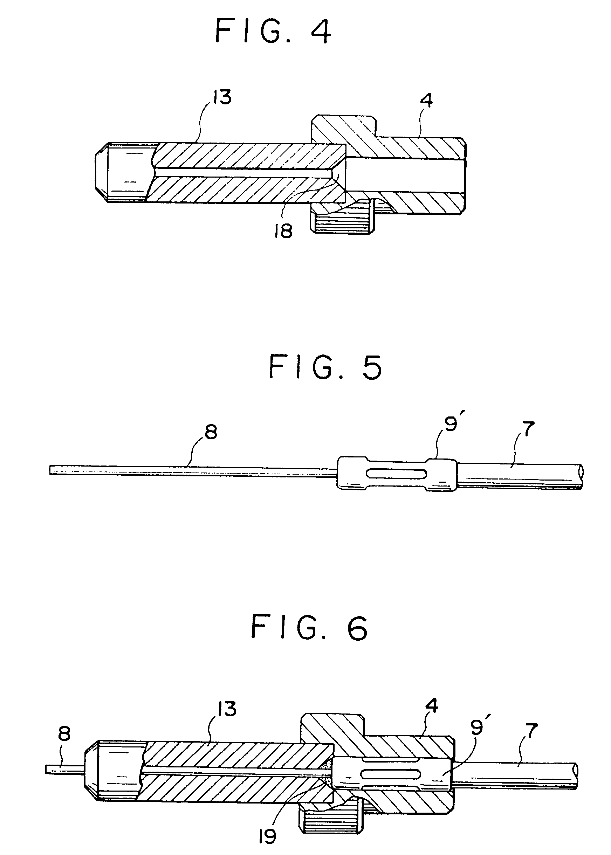

FIG. 4 is the cross-sectional view showing the ferrule 13 which has been press-fitted and fixed in the metal supporting sleeve 4; FIG. 5 is the diagram showing a metal pipe 9' which has been connected to the optical fiber; and FIG. 6 is the cross-sectional view showing the state wherein the optical fiber and the metal pipe 9', which are shown in FIG. 5, have been inserted into the ferrule 13 and the metal supporting sleeve 4. The basic structures of the parts are almost the same as those of the embodiment described above, except that the metal pipe 9' is crimped at four grooves in the outer periphery thereof.

The following describes the manufacturing method for the second embodiment.

First, the ferrule 13 is press-fitted and fixed in the metal supporting sleeve 4 as shown in FIG. 4. Then, the distal end of the optical fiber which has a secondary sheath is inserted in the thin-wall metal pipe 9' so that the part which is longer than the ferrule 13 penetrates. For this embodiment, a single-mode optical fiber was used for the optical fiber; the diameter of the optical fiber was 125 µm; and the diameter of the optical fiber sheath was 0.9 mm.

The metal pipe 9' is crimped so that it is deformed at four places which are symmetrical to the optical axis of the optical fiber and the projections on the internal wall of the metal pipe 9' are let bite into the secondary sheath 7 of the optical fiber, thereby combining the metal pipe 9' and the optical fiber into one piece.

In order to control the damping factor caused by the pressure applied to the optical fiber to 0.05 db/1300 nm or less, the crimping pressure should be controlled to 200 to 400 g/mm or less.

The crimping combines the metal pipe and the secondary sheath into one piece. The secondary sheath applies pressure to the optical fiber. After the crimping, the optical fiber should stay at the center. The crimping structure which is axially symmetrical like this embodiment is preferable.

As shown in FIG. 5, the portions of the secondary sheath 7 and the primary sheath which extend beyond the metal pipe 9' are removed and the exposed portions are immersed in a solvent to clean them. A thermosetting epoxy adhesive agent (EPOTECH 353ND which is a trade name of Epoxy Technology in the United States) 19 is dropped using a syringe needle into an indentation 18 in the base of the ferrule 13 which has been press-fitted and fixed in the supporting sleeve 4 with a flange shown in FIG. 4 until the indentation is flooded.

The glass transition temperature (Tg) of the adhesive agent 19 is 124°C. The aforesaid optical fiber 8 is inserted in the ferrule 13 from the side of the adhesive agent 19 until one end of the crimped metal pipe 9' reaches the ferrule 13. This insertion causes the adhesive agent 19 to run into the ferrule and around the outer periphery of the metal pipe 9'; therefore, when the assembly is heated, the viscosity of the adhesive agent 19 decreases and the adhesive agent 19 spreads, due to the capillary phenomenon, around the optical fiber 8 in the ferrule 13 and between the metal pipe 9' and the supporting sleeve 4, and also between the secondary sheath 7 of the optical fiber and the metal pipe 9'. The heating is performed for a few minutes to ten plus minutes at a temperature which is not higher than the aforesaid glass transition temperature. For example, the adhesive agent 19 hardens when it is heated at 120°C for five minutes. Lastly, the end surface of the ferrule 13 is polished for finishing.

The present invention may be embodied in other forms without departing from the scope thereof. The embodiments described above are therefore to be considered in all respects as illustrative and not restrictive.

As an example of the optical fiber assembly, a single optical fiber connector plug has been shown. The invention, however, may be extensively employed for the optical fiber assemblies of optical structure components including a plurality of plugs for simultaneous connection, optical fiber attenuators, and branch merging devices.

Thus, according to the embodiment wherein the optical fiber assembly in accordance with the present invention is applied to the optical fiber connector plug, although the metal pipe 9 attempts to shift in the axial direction because of the change in the physical property due to the change in the temperature of the protective sheath 7, the problem attributable to that can be solved.

In the first embodiment described above, no problem of the protective sheath 7 slipping out or the optical fiber 8 breaking was observed even after the severe heating cycle test of 100 cycles or more was conducted under the conditions stated above. The optical fiber connector plug of the second embodiment also exhibited nearly the same durability and no problem of the protective sheath 7 slipping out or the optical fiber 8 breaking was observed.

The manufacturing method for optical fiber assemblies in accordance with the present invention allows an optical fiber and a sheath to be fixed at the same time in a single heating step, achieving an extremely simplified manufacturing process.

## Claims

1. An optical fiber assembly comprising:
an optical fiber (8) which has a distal end with a protective sheath (7) removed;
a ferrule (13) fixed to said optical fiber (8);
a thin-wall metal pipe (9,9') which encompasses a fiber portion still having the protective sheath (7) thereon (8); and
a supporting sleeve (4) which is an integral part of said ferrule (13) and which encompasses said thin-wall metal pipe (9,9');
characterized in that said thin-wall metal pipe (9, 9') is crimped onto said protective sheath (7) on said optical fiber (8) whereby the pipe is deformed inwardly at a plurality of places so as to bite into the sheath of said optical fiber (8) by means of a plurality of projections on the inner surface of the pipe; said optical fiber (8) and said metal pipe (9,9') being fixed to said ferrule (13) and said supporting sleeve (4) by gluing with thermosetting resin (19) simultaneously with the glue entering the cavities formed between the inner surface of the sleeve and depressions in the outer surface of the pipe corresponding to the projections.

2. The optical fiber assembly according to Claim 1, wherein the distal end of said metal pipe (9,9') or said sheath (7) is butted against and fixed to said ferrule (13).

3. The optical fiber assembly according to Claim 1 or 2, wherein said optical fiber assembly is an optical fiber connector plug, said ferrule (13) is ceramic, and said supporting sleeve (4) is a metal sleeve.

4. The optical fiber assembly according to any of claims 1 to 3, wherein said plurality of projections of said thin-wall metal pipe (9') are symmetrical to the optical axis of the optical fiber (8).

5. A manufacturing method of an optical fiber assembly comprising:
a step of fixing a ferrule (13) within one end of a supporting sleeve for (4) said ferrule; and
a step of removing the sheath from an end of an optical fiber (8), and introducing an adjacent portion of the fiber still having the sheath thereon into a thin-wall metal pipe (9, 9');
characterized by
a step of crimping the pipe on the sheath (7) whereby the pipe is deformed inwardly at a plurality of places of the metal pipe (9,9') so as to form a plurality of projections which bite into the sheath;
a step of filling the base of said ferrule (13) with a thermosetting adhesive agent and inserting said optical fiber (8) into said ferrule (13) and said metal pipe (9,9') into said supporting sleeve (4) to form an assembly whereby the adhesive agent enters the cavities formed between the inner surface of the sleeve and depressions in the outer surface of the pipe correponding to the projections; and
a step of heating said assembly to fix said optical fiber (8) to said ferrule (13) and said metal pipe (9.9') to said supporting sleeve (4) with an adhesive agent.

## Patentansprüche

1. Lichtwellenleiteranordnung mit:
einem Lichtwellenleiter (8), von dessen vorderem Ende ein Schutzmantel (7) entfernt ist;
einem Anschlußstück (13), das mit dem Lichtwellenleiter (8) verbunden ist;
einer dünnwandigen Metallhülse (9, 9'), die einen noch mit dem Schutzmantel (7) versehenen Abschnitt des Lichtwellenleiters umfaßt; und
einer Stützhülse (4), die einteilig mit dem Anschlußstück (13) ausgebildet ist und die dünnwandige Metallhülse (9, 9') umfaßt;
**dadurch gekennzeichnet,**
daß die dünnwandige Metallhülse (9, 9') auf den Schutzmantel (7) auf dem Lichtwellenleiter (8) aufgepreßt ist, wodurch die Hülse an mehreren Stellen nach innen verformt ist, so daß sie mit einer Mehrzahl von Auswölbungen auf der Innenfläche der Hülse in den Mantel des Lichtwellenleiters (8) eingreift; und
daß der Lichtwellenleiter (8) und die Metallhülse (9, 9') gleichzeitig mit dem Anschlußstück (13) und der Stützhülse (4) durch Verkleben mit wärmehärtbarem Harz (19) verbunden sind, wobei der Klebstoff in die zwischen der Innenfläche der Stützhülse und den den Auswölbungen zugeordneten Vertiefungen auf der Außenseite der dünnwandigen Metallhülse gebildeten Hohlräume eingedrungen ist.

2. Lichtwellenleiteranordnung nach Anspruch 1, wobei das vordere Ende der Metallhülse (9, 9') oder des Mantels (7) an dem Anschlußstück (13) anliegt und an diesem befestigt ist.

3. Lichtwellenleiteranordnung nach Anspruch 1 oder 2, wobei die Lichtwellenleiteranordnung ein Lichtwellenleiter-Verbindungsstecker ist, wobei das Anschlußstück aus Keramik besteht und wobei die Stützhülse (4) eine Metallhülse ist.

4. Lichtwellenleiteranordnung nach einem der Ansprüche 1 bis 3, wobei die Mehrzahl von Auswölbungen der dünnwandigen Metallhülse (9') symmetrisch zur optischen Achse des Lichtwellenleiters (8) verläuft.

5. Verfahren zum Herstellen einer Lichtwellenleiteranordnung, wobei:
ein Anschlußstück (13) in einem Ende einer Stützhülse (4) für das Anschlußstück befestigt wird; und
der Mantel von einem Ende eines Lichtwellenleiters (8) entfernt wird und ein angrenzender Abschnitt des Lichtwellenleiters, der noch mit dem Mantel versehen ist, in eine dünnwandige Metallhülse (9, 9') eingesteckt wird;
**dadurch gekennzeichnet,** daß
die Metallhülse auf den Mantel (7) aufgepreßt wird, wodurch die Metallhülse an einer Mehrzahl von Stellen der Metallhülse (9, 9') nach innen verformt wird, so daß eine Mehrzahl von Auswölbungen gebildet werden, die in den Mantel eingreifen;
der Sockel des Anschlußstücks (13) mit einem wärmehärtbaren Klebemittel gefüllt wird und der Lichtwellenleiter (8) in das Anschlußstück (13) eingeführt und die Metallhülse (9, 9') in die Stützhülse (4) eingeführt wird, um eine Anordnung zu bilden, wodurch das Klebemittel in die zwischen der Innenfläche der Stützhülse und den den Auswölbungen zugeordneten Vertiefungen auf der Außenfläche der Metallhülse gebildeten Hohlräume eindringt; und daß
die Anordnung erhitzt wird, um den Lichtwellenleiter (8) an dem Anschlußstück (13) sowie die Metallhülse (9, 9') an der Stützhülse (4) mit dem Klebemittel zu befestigen.

## Revendications

1. Ensemble à fibre optique comprenant :
une fibre optique (8) ayant une extrémité distale dont une gaine protectrice (7) est enlevée;
un manchon (13) fixé à ladite fibre optique (8),
un tube métallique (9, 9') à paroi mince, qui englobe une partie fibre ayant encore la gaine protectrice (7) sur elle; et
une douille support (4) faisant partie intégrante dudit manchon (13) et englobant ledit tube métallique (9, 9') à paroi mince;
caractérisé par le fait que ledit tube métallique (9, 9') à paroi mince est serti sur ladite gaine protectrice (7), placée sur ladite fibre optique (8), de sorte que le tube est déformé vers l'intérieur en une pluralité d'emplacements de manière à mordre dans la gaine de ladite fibre optique (8), au moyen d'une pluralité de saillies réalisées sur la surface intérieure du tube, ladite fibre optique (8) et ledit tube métallique (9, 9') étant fixés audit manchon (13) et à ladite douille support (4) par collage avec une résine thermodurcissable (19), simultanément au fait que la colle pénètre dans les cavités formées entre la surface intérieure de la douille et les creusements se trouvant sur la surface extérieure du tube, correspondant aux saillies.

2. Ensemble à fibre optique selon la revendication 1, dans lequel l'extrémité distale dudit tube métallique (9, 9') ou de ladite gaine (7) est mise en butée et fixée audit manchon (13).

3. Ensemble à fibre optique selon la revendication 1 ou 2, dans lequel ledit ensemble à fibre optique est un raccord mâle pour fibre optique, ledit manchon (13) étant réalisé en céramique et ladite douille support (4) étant une douille métallique.

4. Ensemble à fibre optique selon l'une quelconque des revendications 1 à 3, dans lequel ladite pluralité de saillies dudit tube métallique (9') à paroi mince sont symétriques par rapport à l'axe optique de la fibre optique (8).

5. Procédé de fabrication d'un ensemble à fibre optique comprenant :
une étape de fixation d'un manchon (13) à une extrémité d'une douille support (4) destinée audit manchon, et
une étape d'enlèvement de la gaine à une extrémité d'une fibre optique (8), et l'introduction d'une partie adjacente de la fibre, ayant encore sur elle la gaine, dans un tube métallique (9, 9') à paroi mince;
caractérisé par
une étape de sertissage du tube sur la gaine (7), de sorte que le tube est déformé vers l'intérieur en une pluralité d'emplacements du tube métallique (9, 9'), de manière à former une pluralité de saillies qui mordent dans la gaine;
une étape de remplissage de la base dudit manchon (13) avec un agent adhésif thermodurcissable et d'insertion de ladite fibre optique (8) dans ledit manchon (13) et ledit tube métallique (9, 9') dans ladite douille support (4) pour former un ensemble, de manière que l'agent adhésif pénètre dans les cavités formées entre la surface intérieure de la douille et les creusements se trouvant sur la surface extérieure du tube, correspondant aux saillies, et
une étape de chauffage dudit ensemble pour fixer ladite fibre optique (8) sur ledit manchon (13) et ledit tube métallique (9, 9') sur ladite douille de support (4) avec un agent adhésif.
